# EUROPEAN PATENT APPLICATION

(11) **EP 1 186 645 A1**
(43) Date of publication of application: **13.03.2002**
(21) Application number: 00202756.3
(22) Date of filing: 03.08.2000
(51) Int. Cl.: C09K 7/00, C09K 7/02

(54) **Drilling fluid comprising a high-amylose starch**

(71) Applicant: Hanseland B.V., 9747 AN Groningen (NL)
(72) Inventor: Stöver, Bernhard.Emile., 9765 CZ Paterswolde (NL)
(74) Representative: Prins, Adrianus Willem

(57) **Abstract**

The invention relates to drilling fluids used in methods for drilling wells into subterranean formations containing oil, gas or other minerals for the purpose of extraction and production of said minerals and the use of starch in such fluids. The invention provides a method for drilling such a well using a drilling fluid comprising a high-amylose starch or starch-blend.

## Description

The invention relates to drilling fluids used in methods for drilling wells into subterranean formations containing oil, gas or other minerals for the purpose of extraction and production of said minerals and the use of starch in such fluids.

Drilling fluids used in methods for drilling production wells are often composed of water to which a wide array of additives, and different combinations thereof, are added to give a drilling fluid the characteristics required for the specific purposes for and circumstances under which it is used. Drilling fluids are for example used to clean and cool the drill bit and to flush to the surface the rock cuttings, stones, gravel, clay or sand that are torn loose by the drill bit. Another purpose is use for minimising formation damage by lining or plastering the walls of the wellbore to prevent caving in and to prevent invasion of solids and liquid into permeable formations, by bridging and sealing with drilling fluid components.

Specific components or additives of drilling fluids are for example properly graded or sized clay (i.e. bentonite or attapulgite clay), salts, silicates, brine, NaCl, CaBr₂, ZnBr₂, NaOH, or others that influence for example solids content, saturation, specific gravity, viscosity and plastering capacities of the fluid. Clay is especially useful since it plasters well and provides a drilling fluid with the necessary viscosity (carrying capacity) to suspend solids and thus carry ground material from out of a wellbore. With the increase in offshore drilling operations, the use of sea water in drilling fluids has increased greatly. This poses extra problems because of its high salinity and the presence of bivalent ions. Other additives, often applied at a lesser concentration than those mentioned above, are specifically added to improve plastering capacities and rheological properties of the fluid. Furthermore, salinity causes the filtration rate of clay suspensions to be high, necessitating the addition of fluid-loss reducing chemicals to keep fluid losses at bay.

Examples of such additives are starches obtained from corn or potatoes, and other polysaccharide polymers such as cellulose. Corn or potato starches, both of the common variety containing both amylose and amylopectine, and of the waxy variety, containing virtually only amylopectine molecules (e.g. 0-5% amylose), and generally chemically cross-linked, are widely used in drilling fluids, for example as water binding compound to reduce or counter fluid loss and to increase viscosity in general.

However, it is well known that organic polymers such as cellulose or starch tend to degrade when held at elevated temperatures for extended periods of time. These drilling-fluid additives are in general only effective up to temperatures of 100°C. The trend towards drilling deeper and thus hotter wells has led to the introduction of synthetic fluid-loss reducers (such as vinylamide, vinylsulphonate or vinylsulphonic acid) which are claimed to be more effective at high temperatures such as at 120-150°C. However, these synthetic fluid-loss reducing agents are in general much more expensive than the earlier mentioned starches. Furthermore, these is a distinct need to drill even deeper wells, and, consequently, a distinct need for fluid-loss reducers with even higher resistance towards high temperatures.

Also, the presence of chemical cross-linkers, such as epichlorohydrine, in chemically modified or cross-linked starches, is often seen as undesirable from the perspective of environmental requirements, and the present synthetic fluid-loss reducers are often also been considered to have disadvantages from the environmental perspective.

The invention provides a method for drilling a well into subterranean formations containing oil, gas or other minerals using a drilling fluid comprising a high-amylose starch or starch-blend. In general starches contain two types of glucose polymers. Amylose is a predominantly linear chain molecule and amylopectin is a branched polymer of glucose. Drilling fluids that are commonly used comprise corn or potato starch having normal, i.e. approximately 24-27% or 20-22% respectively, amylose content, or the waxy versions thereof that in general contain below 5% amylose. For the purpose of the invention, any starch comprising more amylose than 27-28% is defined as high-amylose starch.

In a preferred embodiment, the invention provides a method wherein said starch or blend comprises at least 30%, preferably at about 32-37% amylose, thus substantially higher than current starches used in drilling fluids. Such starches can be obtained by blending normal-amylose content starches with amylose derived from for example distinct corn varieties or other plants that contain more amylose than in general is found. A distinct corn variety is known that contains about 70% amylose in its starch, and by blending such a starch with commonly known starches, starch blends with amylose percentages higher than 30% are within easy reach. Also, various legume varieties, such as peas, beans or lentils are known that have amylose contents exceeding 30%, and starches derived from legumes thus easily can be used within a method as provided by the invention. Other starches with high-amylose content, such as ginger starch, galangal root starch or chufa nut starch, are known in the art as well and can be used according to the invention. Of course, it is not preferred to make blends with the waxy type starches comprising no or only little amylose, although for some uses blending in some waxy starch need not be excluded, considering rheological properties of some of those amylopectine starches.

In a further preferred embodiment, the invention provides a method wherein said starch or starch blend is physically modified. Such physical modification can for example comprise extrusion. Surprisingly it was found that by using a method or drilling fluid as provided by the invention, substantially higher resistance against elevated temperatures (shown for example by only slight or minimal reductions of viscosity and/or fluid loss detectable after treatment at elevated temperatures) is achieved, even without having to chemically cross-link or in any other way chemically modify or stabilise the starch. Therewith, the invention provides a drilling fluid having resistance against elevated temperatures such as 110, 130, 150 or even 170 °C, values hitherto unknown for starches nor having been chemically cross-linked and/or stabilised. Chemical modification may still be advantageous when producing starches or blends for drilling fluids according to the invention having even higher or further resistance against elevated temperatures or other required characteristics obtainable via chemical modification, but initially, the invention provides the insight that chemically cross-linking or stabilising is not *ab initio* required to provide the desired higher resistance against elevated temperatures for starches in drilling fluid.

Preferably, the invention provides a method or drilling fluid comprising use of a high-amylose starch that has been physically modified by extrusion in for example a single or double screw extruder. Extrusion cookers or extruders in general are composed of several components: A live bin which provides a buffer stock of raw material at the extruder inlet; a variable speed feeding screw which meters raw material into the extruder barrel at a predetermined rate; an optional preconditioning cylinder which injects steam and/or water into the powdered ingredients and allows the mixture to at least partially equilibrate; and the extruder barrel. The extruder barrel consists of the chamber walls, which enclose the screw(s) and the material as it is being processed, jacketed heads, and rotating screw(s). The extruder heads in general have jackets containing circulating steam, water or other heat transfer mediums, which permit adjustment of the temperature along the barrel. The diameter of the extruder cavity may be uniform throughout its length, or it may be tapered (decreasing in diameter) from front to back; some of the sections may be tapered while others are not. In general the barrel is capped with a die plate containing one or several orifices through which the extrudate is forced. Extrusion variables known in the art are within the method of feeding and pre-conditioning of the starch; within the method and point of moisture application, within control of temperature and moisture content of starch entering the extruder; within control of temperatures within each extruder section; within control of the point within the extruder where maximum dough viscosity is attained; within control of extrusion speeds; within control of time and temperature relationships within each section of the extruder; within control of the time within which product temperatures are elevated to maximum extrusion temperatures; within control of final extrusion temperatures; within selection of the shaping and sizing devices; within selection of the type, dwell time, drying temperature and velocities within the dryer and the cooler and the final product moisture.

Such extrusion can occur under wet or semi-wet conditions but dry or semi-dry extrusion is preferred, if only because less volume needs to be treated. To further generate temperature resistance, said starch or starch blend can of course comprise a chemically cross-linked starch, either a blended in fraction or-the total fraction can optionally be cross-linked and/or stabilised by one of the various method known in the art.

Furthermore, the invention provides drilling fluid (herein also referred to as mud composition) for use in a method according to the invention comprising a high-amylose starch as defined herein. Also, the invention provides a starch or starch blend for use in a drilling fluid according to the invention, preferably a high-amylose starch that has been physically modified by for example extrusion in a single or double screw extruder. Such as starch is preferably at least partly derived from a high-amylose corn starch or from a legume. The invention is further explained in the detailed description herein without limiting the invention. Examples of mud compositions or drilling fluids according to the invention.

| Mud composition I | Fresh water | | |
|---|---|---|---|
| | NaCl | 40 kg/m3 | 14ppb |
| | Sodium Bicarbonate | 2.9 kg/m3 | 1ppb |
| | Bentonite | 100 kg/m3 | 29ppb |
| | *Product* | 9 kg/m3 | 3ppb |
| Results | | | |

| | Apparent Viscosity | pH | API Fluidloss, ml |
|---|---|---|---|
| 25 Celsius | 10.0 | 8.3 | 6.0 |
| 16 hrs, 140 Celsius | 7.0 | 8.2 | 6.0 |

| Mud composition II | Sea water | | |
|---|---|---|---|
| | Sodium Bicarbonate | 2.9 kg/m3 | 1ppb |
| | Attapulgite | 40 kg/m3 | 14ppb |
| | *Product* | 15 kg/m3 | 5ppb |
| Results | | | |

| | Apparent Viscosity | pH | API Fluidloss, ml |
|---|---|---|---|
| 25 Celsius | 26 | 8.2 | 8.2 |
| 16 hrs, 140 Celsius | 10 | 8.1 | 8.4 |

| Mud composition III | Fresh water | | |
|---|---|---|---|
| | NaCl(Saturated) | 400 kg/m3 | 140ppb |
| | Sodium Bicarbonate | 2.9 kg/m3 | 1ppb |
| | Bentonite | 50 kg/m3 | 17.5ppb |
| | Product | 15 kg/m3 | 5ppb |
| Results | | | |

| | Apparent Viscosity | pH | API Fluidloss, ml |
|---|---|---|---|
| 25 Celsius 9.0 | | 8.1 | 2.0 |
| 16 hrs, 140 Celsius 7.5 | | 7.8 | 3.5 |

| Mud composition IV | Fresh water | |
|---|---|---|
| | NaCl | 40 kg/m3 |
| | Sodium Bicarbonate | 2.9 kg/m3 |
| | Bentonite (OCMA Clay) | 100 kg/m3 |
| | *Product* | 9 kg/m3 |
| Results | | |

| | Apparent Viscosity | API Fluidloss, ml |
|---|---|---|
| 25 Celsius | 10.0 | 6.0 |
| 16 hrs, 160 Celsius | 6.0 | 7.0 |
| Note: *Product* herein comprises a high-amylose legume starch comprising at about 32% amylose. API fluidloss was determined according to the guidelines of the American Petroleum Institute. Control compositions comprising normal starch containing about 35% amylose instead of *Product* maintained integrity at treatments up to about 110°C, but disintegrated after 16 hrs, 160 Celsius, whereby fluid losses of more than 40 ml were observed. | | |

## Claims

1. A method for drilling a well into subterranean formations containing oil, gas or other minerals using a drilling fluid comprising a high-amylose starch or starch-blend.

2. A method according to claim 1 wherein said starch or blend comprises at least 30% amylose.

3. A method according to claim 1 or 2 wherein said starch or blend is at least partly derived from corn.

4. A method according to claim 1 or 2 wherein said starch or blend is at least partly derived from a legume.

5. A method according to anyone of claims 1 to 4 wherein said starch or blend is physically modified.

6. A method according to any of claims 1 to 5 wherein said starch or starch blend comprises a cross-linked starch.

7. A method according to any of claims 1 to 6 wherein said starch is stabilised.

8. A drilling fluid comprising a high amylose starch.

9. A drilling fluid according to claim 8 comprising a starch or starch-blend comprising at least 30% amylose.

10. A drilling fluid according to claim 8 or 9 comprising corn or legume starch.

11. Use of a high-amylose starch or starch-blend for the preparation of a drilling fluid.

12. Use of a high-amylose starch or starch-blend in a method for drilling a well into subterranean formations.

13. Use according to claim 11 or 12 wherein said starch or blend comprises corn or legume starch.
